# EUROPÄISCHE PATENTSCHRIFT

(11) **EP 2 845 214 B1**
(45) Veröffentlichungstag und Bekanntmachung des Hinweises auf die Patenterteilung: **15.11.2017**
(21) Anmeldenummer: 13723494.4
(22) Anmeldetag: 15.05.2013
(51) Int. Cl.: H01H 33/59, H02H 7/26, H02H 3/087

(54) **VORRICHTUNG ZUM SCHALTEN IN EINEM GLEICHSPANNUNGSNETZ**
APPARATUS FOR SWITCHING IN A DC VOLTAGE MAINS
DISPOSITIF DESTINÉ À LA COMMUTATION DANS UN RÉSEAU DE TENSION CONTINUE

(30) Priorität: 13.06.2012 DE 102012209903
(43) Veröffentlichungstag der Anmeldung: 11.03.2015
(73) Patentinhaber: Siemens Aktiengesellschaft, 80333 München (DE)
(72) Erfinder: GAXIOLA, Enrique, 13090 Aix en Provence (FR); SCHÖN, Andre, 95447 Bayreuth (DE)
(86) Internationale Anmeldenummer: PCT/EP2013/060072
(87) Internationale Veröffentlichungsnummer: WO 2013/186004

(56) Entgegenhaltungen:
- EP-B1- 2 789 068
- WO-A1-2013/107556
- DE-A1- 2 312 238
- DE-A1- 3 734 989
- DE-B- 1 069 758

## Beschreibung

Die Erfindung betrifft eine Vorrichtung zum Schalten in einem Gleichspannungsnetz.

Leistungselektronische Systeme in der Energieversorgung - mit sehr hohen erforderlichen Spannungen und Leistungen - gewinnen zunehmend an Bedeutung. Insbesondere für künftige, räumlich ausgedehnte und verzweigte Hochspannungs-Gleichstrom-Netze (engl.: Multiterminal-HVDC) werden Schaltungsanordnungen benötigt, welche die sichere und schnelle Beherrschung von möglichen Störungsfällen sowie geringste Energieverluste im Normalbetrieb ermöglichen. Diese Anforderungen treten insbesondere bei zukünftigen DC-Netzen mit hohen Spannungen und länderübergreifender Fernübertragung auf.

Räumlich ausgedehnte und verzweigte HVDC-Netze werden beispielsweise für ausgedehnte Off-Shore-Windparks und die Nutzung großer Solarkraftwerke in fernen Wüstengebieten künftig benötigt. Insbesondere müssen Kurzschlüsse im HVDC-Netz beherrscht und fehlerbehaftete oder kurzgeschlossene Abschnitte des Netzes freigeschaltet werden können.

Günstige mechanische Schalter für die extrem hohen DC-Spannungen, welche hohe Fehlerströme unter Last schalten können, stehen wegen grundlegender physikalischer Probleme nicht zur Verfügung. Auch die technisch erreichbaren Abschaltzeiten und die Schaltüberspannungen mechanischer Schalter sind extrem störend. Entsprechend dem Stand der Technik sind deshalb mechanische Schalter für diese Anwendungen nur als lastlos (stromlos) schaltende Trenner günstig realisierbar. Schaltvorrichtungen sind zum Beispiel aus den Dokumenten DE 37 34 989 A1, DE 23 12 238 A1 und DE 10 69 758 B bekannt.

Aufgabe der Erfindung ist es, eine einfach aufgebaute Vorrichtung zum Schalten in einem DC-Netz anzugeben.

Diese Aufgabe wird durch eine Vorrichtung mit den Merkmalen von Anspruch 1 gelöst.

Die erfindungsgemäße Vorrichtung zum Schalten in einem Gleichspannungsnetz weist eine Schalteinrichtung zum Unterbrechen des Stromflusses in wenigstens einer ersten Leitung des Gleichspannungsnetzes auf. Die Schalteinrichtung ist dabei mit einem ersten und einem zweiten Anschluss in die erste Leitung des Gleichspannungsnetzes einfügbar.

Weiterhin weist die Vorrichtung ein Dämpfungsglied zur Energieaufnahme der anliegenden Klemmenspannung auf. Das Dämpfungsglied wiederum weist einen ersten und einen zweiten Knotenpunkt auf, die elektrisch über ein Dämpfungselement verbunden sind. Weiterhin besteht eine elektrische Verbindung vom ersten Knotenpunkt zum ersten Anschluss über entweder ein erstes gesteuertes oder ein erstes ungesteuertes Schaltelement, wobei das erste ungesteuerte Schaltelement Halbleiterdioden aufweist, die aus Sicht des ersten Knotens leitend geschaltet sind sowie eine elektrische Verbindung vom ersten Knotenpunkt zum zweiten Anschluss über entweder ein zweites gesteuertes oder ein zweites ungesteuertes Schaltelement, wobei das zweite ungesteuerte Schaltelement Halbleiterdioden aufweist, die aus Sicht des ersten Knotens leitend geschaltet sind. Zweckmäßig ist das Dämpfungsglied vom zweiten Knotenpunkt aus mit einer zweiten Leitung des Gleichspannungsnetzes und/oder einem Erdpotential verbindbar.

Vorteilhaft wird dadurch erreicht, dass ein einzelnes Dämpfungselement für beide der möglichen Stromflussrichtungen verwendbar ist. Für die Auftrennung der ersten Leitung wird das Dämpfungselement über die Schaltelemente mit der richtigen Seite der Schalteinrichtung verbunden, so dass eine Entregung der Leitungsinduktivität nach Unterbrechung des eigentlichen Stromflusses ermöglicht wird. Dadurch wird die Verwendung zweier oder noch mehr Dämpfungselemente, jedes für eine Stromflussrichtung, unnötig.

Zweckmäßig umfasst das Dämpfungselement ein oder mehrere nichtlineare Widerstände, insbesondere Varistoren.

In einer ersten vorteilhaften Ausgestaltung der Erfindung umfasst das erste und/oder zweite Schaltelement Halbleiterschalter, insbesondere Thyristoren. Die Verwendung von Halbleiterschaltern erlaubt es, den genauen Zeitpunkt zu steuern, zu dem bei der Trennung der ersten Leitung der Freilaufkreis für den induktiv getriebenen Strom geschaffen wird. Auch lässt sich der Freilaufkreis kontrolliert wieder unterbrechen.

Wenn das erste und/oder zweite Schaltelement Halbleiterdioden umfasst,
wird erreicht, dass eine aktive Anschaltung des Dämpfungselements bei einer Trennung der ersten Leitung durch die Schalteinrichtung unnötig wird. Eine der unter normalen Umständen blockierenden Dioden wird durch die stromabwärts liegende Leitungsinduktivität leitend geschaltet, da diese den Strom weitertreibt und für eine gewisse Zeit ein entsprechendes Spannungsgefälle erzeugt. So wird ohne ein Zutun durch eine Steuerungsschaltung sicher ein Freilaufkreis für den Strom geschaffen, was für eine erhöhte Sicherheit und einen einfacheren Aufbau und Betrieb des Schalters sorgt.

In einer weiteren vorteilhaften Ausgestaltung umfasst das erste und zweite Schaltelement mechanische Schalter. Weiterhin umfasst das Dämpfungselement einen weiteren Halbleiterschalter zwischen dem ersten und zweiten Knotenpunkt. Vorteilhaft lässt sich hierbei beispielsweise eine visuell prüfbare Trennung des Dämpfungselements von der ersten Leitung realisieren. Auch hier, wie bei der ersten Ausgestaltung, lässt sich der genaue Zeitpunkt steuern, zu dem bei der Trennung der ersten Leitung der Freilaufkreis für den induktiv getriebenen Strom geschaffen wird. Wiederum lässt sich der Freilaufkreis kontrolliert wieder unterbrechen.

Gemäß einer weiteren Ausgestaltung und Weiterbildung der Erfindung sind das erste und zweite Schaltelement Teile eines mechanischen oder leistungselektronischen Umschalters. Mit anderen Worten sind die Schaltelemente nicht separat steuerbare Schalter, sondern als ein Umschalter realisiert. Gemäß einer weiteren Ausgestaltung der Erfindung umfasst der Umschalter dabei mehr als zwei Schaltpositionen. Dabei ist zweckmäßig einer der elektrischen Abgänge mit Erde oder einer zweiten Leitung des Gleichstromnetzes verbunden. Alle weiteren elektrischen Abgänge sind zweckmäßig mit der einen oder anderen Seite mehrerer Schalteinrichtungen verbunden.

In einer weiteren vorteilhaften Ausgestaltung ist der Umschalter als Mehrzahl von parallelen Dioden ausgestaltet. Hierdurch wird wiederum erreicht, dass der Umschalter keine Steuerung benötigt, sondern selbsttätig den Freilaufkreis eröffnet, sobald eine Trennung durch eine der angeschlossenen Schalteinrichtungen vorgenommen wird.

Zweckmäßig umfasst die Schalteinrichtung zwei gegensinnig in Reihe geschaltete Hybridschalter, die jeweils eine Parallelschaltung eines ungesteuerten stromrichtungsabhängigen Schalters und eines steuerbaren Schalters aufweisen. Die zwei gegensinnig in Reihe geschalteten Hybridschalter sind dabei wie bereits eingangs beschrieben mit dem ersten und zweiten Anschluss in die erste Leitung des Gleichspannungsnetzes einfügbar. Der ungesteuerte stromrichtungsabhängige Schalter ist bevorzugt eine Halbleiterdiode, während der steuerbare Schalter bevorzugt eine Vakuumschaltröhre ist.

Weiterhin umfasst die Schalteinrichtung bevorzugt einen Stromimpulsgenerator, der auf einen Steuerbefehl hin zum Erzeugen eines Stromimpulses eingerichtet ist, so dass die Stromrichtung in einem der Hybridschalter kurzzeitig umkehrbar ist.

Der Stromimpulsgenerator umfasst dabei zweckmäßig mindestens einen kapazitiven Energiespeicher und eine Induktivität, die über einen steuerbaren Schalter kurzzeitig elektrisch miteinander verbunden werden können, sowie einen Schaltungspfad zur Aufladung des kapazitiven Energiespeichers aus der Spannung des Gleichspannungsnetzes und zur Überspannungsbegrenzung, welcher mindestens diesen Energiespeicher und/oder einen Reihenwiderstand und eine Sperrdiode enthält.

Vorteilhaft ist es, wenn dem Stromimpulsgenerator zusätzliche Elemente zur Überspannungsbegrenzung, insbesondere nichtlineare Widerstände wie Varistoren, parallel geschaltet oder in diesen integriert sind.

Einen Vorteil stellt in diesem Zusammenhang die Tatsache dar, dass in den beschriebenen Vorrichtungen keine Halbleiter mit fehlerkritischen, nicht stoßstromfesten Kontaktleitungen - wie z. B. Bonddrähte bei IGBT-Transistoren - notwendig sind. Da ausschließlich Halbleiterdioden und Thyristoren verwendet werden, sind Bauelemente mit stoßstromfester Druckkontaktierung einsetzbar.

Insbesondere ermöglicht die beliebige Serienschaltbarkeit aller erfindungsgemäßen Subsysteme eine freie Wahl der Nennspannung der eingesetzten Bauelemente unabhängig von der vorgegebenen Spannung des DC-Netzes. Ein Aspekt sind diesbezüglich wirtschaftliche Gründe und die marktübliche Verfügbarkeit der Bauelemente. Ein technisch wichtigerer Freiheitsgrad, welcher aus dieser Eigenschaft resultiert, ist jedoch die Optimierung der Schaltgeschwindigkeit der realisierbaren DC-Schalter.

Weitere zweckmäßige Ausgestaltungen und Vorteile der Erfindung sind Gegenstand der nachfolgenden Beschreibung von Ausführungsbeispielen der Erfindung unter Bezug auf die Figuren der Zeichnung, wobei gleiche Bezugszeichen auf gleich wirkende Bauteile verweisen. Es zeigen
Figur 1 einen Ausschnitt aus einem räumlich ausgedehnten verzweigten Gleichspannungsnetz gemäß dem Stand der Technik,
Figuren 2, 3 und 6 prinzipielle DC-Schalteranordnungen,
Figuren 4 und 5 Betriebszustände der DC-Schalteranordnungen,
Figur 7 einen Knotenpunkt eines verzweigten Gleichspannungsnetzes, Figur 8 einen alternativen Umschalter für den Knotenpunkt.

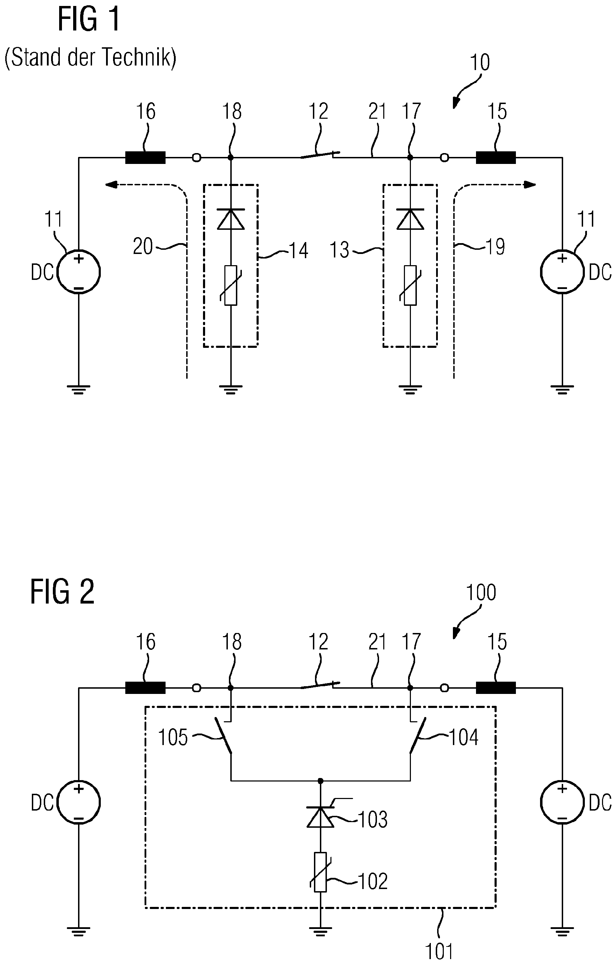

Figur 1 zeigt schematisch einen Ausschnitt 10 aus einem räumlich ausgedehnten verzweigten Gleichspannungsnetz gemäß dem Stand der Technik. Transformatoren 11 erzeugen eine hohe Gleichspannung auf einer Leitung 21. Die Leitung 21 weist in dem gezeigten Ausschnitt einen DC-Schalter 12 auf, auf dessen einer Seite ein erster Knoten 17 und auf dessen anderer Seite ein Knoten 18 ist. Der DC-Schalter 12 ist ausgestaltet, mittels eines kurzen Strompulses einen DC-Trenner kurzfristig stromlos werden zu lassen, woraufhin eine Trennung der Leitung 21 erfolgen kann.

Nach einer Trennung der Leitung 21 treiben die Leitungsinduktivitäten 15, 16 einen Stromfluss weiter und es muss für einen Abbau der Energie gesorgt werden. Im Aufbau gemäß der Figur 1 sind dafür zwei getrennte Dämpfungsglieder 13, 14 vorgesehen. Das erste Dämpfungsglied 13 ist bei einem ersten Knoten 17 auf einer ersten Seite des DC-Schalters 12 angeschlossen, während das zweite Dämpfungsglied 14 ist bei einem zweiten Knoten 18 auf einer zweiten Seite des DC-Schalters 12 angeschlossen ist. Je nach der vorigen Stromflussrichtung fließt der Strom nach der Trennung gemäß dem ersten Pfeil 19 oder gemäß dem zweiten Pfeil 20 durch das erste Dämpfungsglied 13 bzw. das zweite Dämpfungsglied 14. Es werden also zwei separate Dämpfungsglieder 13, 14 für die beiden möglichen Stromrichtungen benötigt. Diese sind ggfs. örtlich getrennt.

Figur 2 zeigt ein erstes Beispiel für eine erste DC-Schalteranordnung 100 gemäß der Erfindung, wiederum in einem räumlich ausgedehnten verzweigten Gleichspannungsnetz. Ebenso wie in Figur 1 ist hier ein DC-Schalter 12 in der Leitung 21 vorgesehen. Anstelle der separaten Dämpfungsglieder 13, 14 ist in der ersten DC-Schalteranordnung 100 jedoch nur ein erstes Dämpfungsglied 101 vorgesehen. Das erste Dämpfungsglied 101 umfasst einen Varistor 102 und dazu in Reihe einen Thyristor 103. Darauf folgend verzweigt sich das erste Dämpfungsglied 101 zu einem ersten und einem zweiten mechanischen Schalter 104, 105. Der erste mechanische Schalter 104 ist abseits des Thyristors 103 mit dem ersten Knoten 17 verbunden, während der zweite mechanische Schalter 105 abseits des Thyristors 103 mit dem zweiten Knoten 18 verbunden ist.

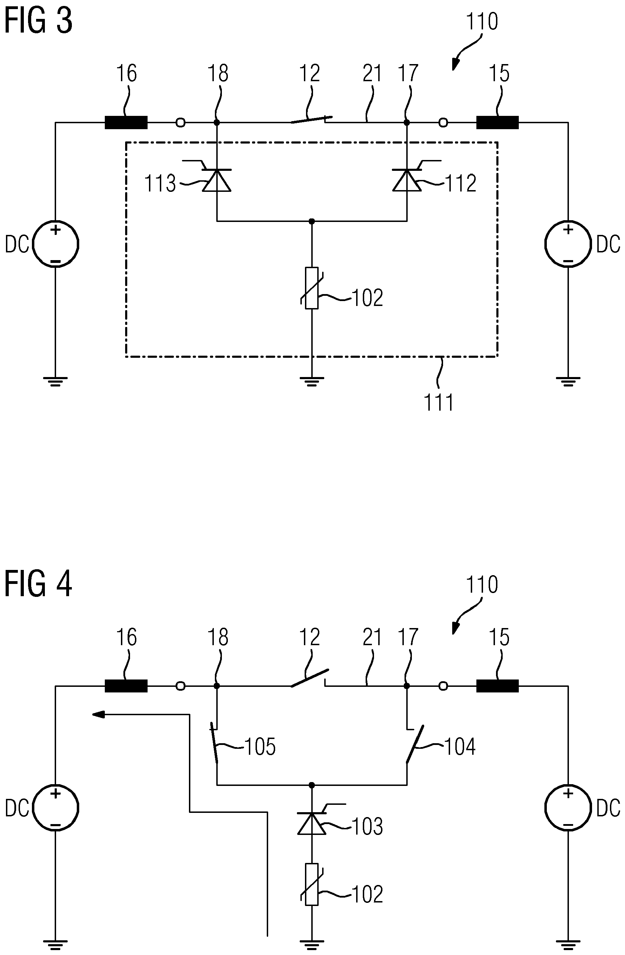

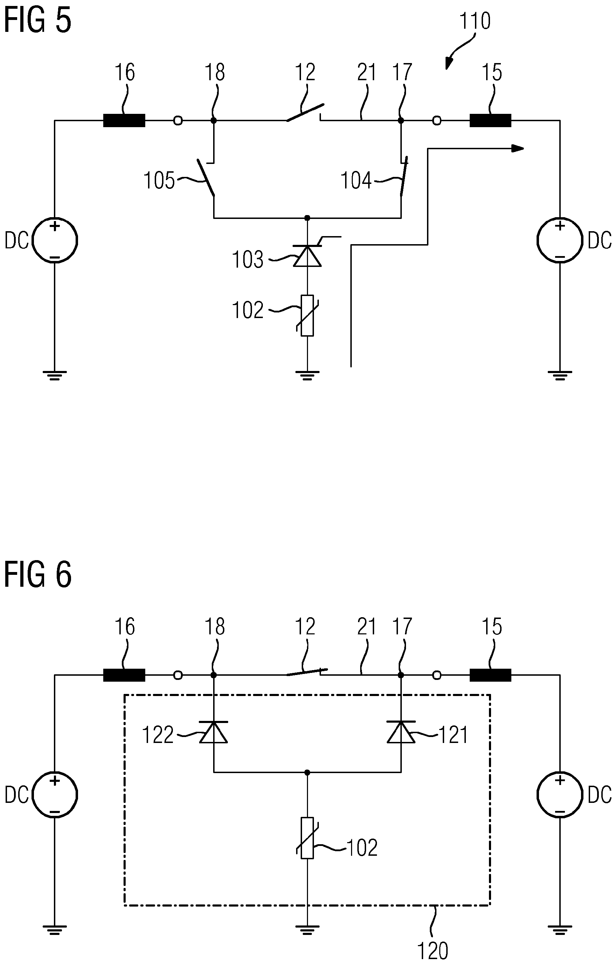

Im normalen Betriebszustand des DC-Netzes sind die mechanischen Schalter 104, 105 offen. Soll jedoch eine Entregung stattfinden, so wird einer der mechanischen Schalter 104, 105 geschlossen und sodann der Thyristor 103 gezündet, sodass ein Stromfluss durch das erste Dämpfungsglied 101 möglich ist. Der Schaltzustand für die Entregung im Falle eines Stromflusses vom ersten Knoten 17 zum zweiten Knoten 18 ist in Figur 4 dargestellt. Hier ist der zweite mechanische Schalter 105 geschlossen, während der erste mechanische Schalter 104 offen ist. Der Thyristor 103 wurde hier gezündet, so dass der durch den Pfeil angedeutete Stromfluss ermöglicht ist. Figur 5 wiederum zeigt den Schaltzustand für die Entregung im Falle eines Stromflusses vom zweiten Knoten 18 zum ersten Knoten 17. Hier ist der erste mechanische Schalter 104 geschlossen, während der zweite mechanische Schalter 105 offen ist. Der Thyristor 103 wurde hier ebenfalls gezündet, so dass der durch den Pfeil angedeutete Stromfluss ermöglicht ist.

Ein alternatives Ausführungsbeispiel, das ohne mechanische Schalter 104, 105 auskommt, ist in Figur 3 dargestellt. Hier sind wieder die meisten Elemente der Figur 2 wiederholt, jedoch ist statt dem ersten Dämpfungsglied 101 ein zweites Dämpfungsglied 111 verbaut. Das zweite Dämpfungsglied 111 umfasst neben dem Varistor 102 einen ersten und zweiten Thyristor 112, 113, wobei der erste Thyristor 112 mit dem ersten Knoten 17 und der zweite Thyristor 113 mit dem zweiten Knoten 18 verbunden ist.

Beim zweiten Dämpfungsglied 111 bleiben im Normalzustand die Thyristoren 112, 113 ungezündet. Soll jedoch eine Entregung stattfinden, so wird einer der beiden Thyristoren 112, 113 entsprechend der Stromrichtung, die vor der Trennung herrschte, gezündet und erlaubt so wieder den Stromfluss zur Entregung.

Ein drittes Ausführungsbeispiel ist in der Figur 6 skizziert. Hier wird ein drittes Dämpfungsglied 120 verwendet. Das dritte Dämpfungsglied 120 umfasst anstelle der Thyristoren 112, 113 des zweiten Dämpfungsglieds 111 Dioden 121, 122, die aus Sicht der Leitung 21 sperrend geschaltet sind. Sie verhindern damit zu jeder Zeit den Kurzschluss über das dritte Dämpfungsglied, erlauben jedoch im Falle einer nötigen Entregung einen Stromfluss aus Richtung des Varistors 102. Vorteilhaft ist beim dritten Dämpfungsglied 120 keinerlei aktive Schaltung nötig. Die durch die Leitungsinduktivitäten 15, 16 erzeugte Spannung nach der Trennung sorgt selbständig für eine Leitung über die Dioden 121, 122.

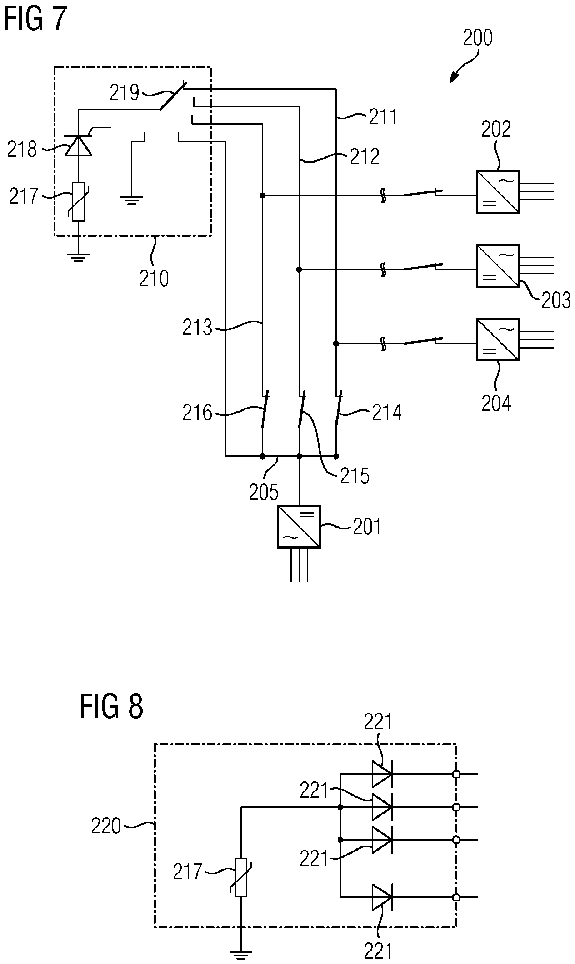

Figur 7 zeigt ein viertes Ausführungsbeispiel für die Erfindung. Figur 7 zeigt einen Knotenpunkt 200 eines DC-Netzwerks. Der Knotenpunkt 200 umfasst einen ersten AC/DC-Transformator 201, dessen DC-Ausgang zu einer Sammelschiene 205 führt. An der Sammelschiene sind drei Abgänge angeschlossen, die über jeweils einen ersten DC-Schalter 214...216 zu jeweils einem zweiten DC-Schalter führen. An die zweiten DC-Schalter schließen sich weiter AC/DC-Transformatoren 202...204 an, deren Ausgänge jeweils zu weiteren, nicht in der Figur 7 gezeigten AC-Netzen führen. Mit anderen Worten sind aus Sicht des ersten Transformators 201 drei DC-Stränge parallel geschaltet.

Der Knotenpunkt 200 weist nun als Besonderheit ein schaltbares Dämpfungsglied 210 auf. Das schaltbare Dämpfungsglied 210 weist einen mit Erde verbundenen Varistor 217 und dazu in Serie einen Thyristor 218 auf. Dazu in Serie wiederum ist ein Umschalter 219 angeordnet. Der Umschalter 219 wiederum ist so gestaltet, dass er eine Verbindung zu einem der drei parallelen DC-Stränge zur jeweiligen DC-Leitung 211, 212, 213 herstellen kann. Weiterhin besteht ein Abgriff zur Sammelschiene und ein weiterer Abgriff direkt zu Erde.

Das schaltbare Dämpfungsglied 210 stellt somit für einen Entregungsvorgang eines der DC-Schalter 214, 215, 216 das Dämpfungselement 217 zur Verfügung und muss nicht mehrfach ausgeführt werden. Das Dämpfungselement in Form des Varistors 217 wird mit dem jeweiligen Abgang oder mit der Sammelschiene 205 verbunden, um die Entregung zu erlauben. Dabei ist durch die mögliche Verbindung mit der Sammelschiene 205 ebenfalls wieder eine Entregung für beide möglichen Stromrichtungen möglich.

Eine alternative Ausführungsmöglichkeit für das schaltbare Dämpfungsglied 210 ist als zweites schaltbares Dämpfungsglied 220 in Figur 8 dargestellt. Das zweite schaltbare Dämpfungsglied 220 ist ebenso angeschlossen im Knotenpunkt 200 wie das schaltbare Dämpfungsglied 210 gemäß der Figur 7. Es weist ebenfalls den Varistor 217 auf. Allerdings entfällt beim zweiten schaltbaren Dämpfungsglied 220 der Thyristor 218 und der Umschalter 219 ist durch eine Reihe von aus Sicht des Varistors 217 parallel geschalteten Dioden 221 ersetzt. Die Dioden 221 sind zweckmäßig aus Sicht des Varistors 217 leitend geschaltet, aus Sicht des DC-Netzwerks sperrend. Eine Diodenverbindung zu Erde entfällt. Ebenso wie beim dritten Ausführungsbeispiel gemäß Figur 6 ist nun für die Entregung keine aktive Schaltung mehr nötig, da die von den Leitungsinduktivitäten aufgebaute Spannung die Dioden 221 automatisch in den leitenden Zustand versetzt.

## Patentansprüche

1. Vorrichtung zum Schalten in einem Gleichspannungsnetz mit einer Schalteinrichtung (12) zum Unterbrechen des Stromflusses in wenigstens einer ersten Leitung (21, 211, 212, 213) des Gleichspannungsnetzes, wobei die Schalteinrichtung (12) mit einem ersten und einem zweiten Anschluss (17, 18) in die erste Leitung (21, 211, 212, 213) des Gleichspannungsnetzes einfügbar ist, und einem Dämpfungsglied (101, 111, 120, 210, 220) zur Energieaufnahme der anliegenden Klemmenspannung, das
- einen ersten und einen zweiten Knotenpunkt aufweist, die elektrisch über ein Dämpfungselement (102, 217) verbunden sind,
- eine elektrische Verbindung vom ersten Knotenpunkt zum ersten Anschluss (17) über entweder ein erstes gesteuertes Schaltelement (104, 112) aufweist oder über ein erstes ungesteuertes Schaltelement (121, 221) aufweist, wobei das erste ungesteuerte Schaltelement (121, 221) Halbleiterdioden aufweist und aus Sicht des ersten Knotens leitend geschaltet ist, **gekennzeichnet durch**
- eine elektrische Verbindung vom ersten Knotenpunkt zum zweiten Anschluss (18) über entweder ein zweites gesteuertes Schaltelement (105, 113) oder über ein zweites ungesteuertes Schaltelement (122, 221), wobei das zweite ungesteuerte Schaltelement (122, 221) Halbleiterdioden aufweist und aus Sicht des ersten Knotens leitend geschaltet ist.

2. Vorrichtung gemäß Anspruch 1, bei der das erste und/oder zweite Schaltelement (104, 112, 121, 221, 105, 113, 122, 219) Halbleiterschalter (112, 113), insbesondere Thyristoren (112, 113), aufweist.

3. Vorrichtung gemäß Anspruch 1, bei der das erste und/oder zweite Schaltelement (104, 112, 121, 221, 105, 113, 122, 219) mechanische Schalter (104, 105, 219) umfassen und bei der das Dämpfungsglied (101, 210) einen weiteren Halbleiterschalter (13, 218) zwischen dem ersten und zweiten Knotenpunkt umfasst.

4. Vorrichtung gemäß einem der vorangehenden Ansprüche, bei der das Dämpfungselement (102, 217) ein oder mehrere Varistorelemente (102, 217) umfasst.

5. Vorrichtung gemäß einem der vorangehenden Ansprüche, bei der das erste und zweite Schaltelement (104, 112, 121, 221, 105, 113, 122) Teile eines mechanischen oder leistungselektronischen Umschalters (219, 221) sind.

6. Vorrichtung gemäß einem der vorangehenden Ansprüche, bei der die Schalteinrichtung (12) zwei gegensinnig in Reihe geschaltete Hybridschalter aufweist, die jeweils eine Parallelschaltung eines ungesteuerten stromrichtungsabhängigen Schalters und eines steuerbaren Schalters aufweisen.

7. Vorrichtung gemäß Anspruch 6, bei der die Schalteinrichtung (12) einen Stromimpulsgenerator aufweist, der auf einen Steuerbefehl hin zum Erzeugen eines Stromimpulses eingerichtet ist, so dass die Stromrichtung in einem der Hybridschalter kurzzeitig umkehrbar ist.

8. Vorrichtung nach Anspruch 6 oder 7, bei der der ungesteuerte stromrichtungsabhängige Schalter eine Halbleiterdiode ist.

9. Vorrichtung nach einem der Ansprüche 6 bis 8, bei der der steuerbare Schalter eine Vakuumschaltröhre ist.

10. Vorrichtung nach einem der vorhergehenden Ansprüche, wobei der Stromimpulsgenerator mindestens einen kapazitiven Energiespeicher und eine Induktivität enthält, die über einen steuerbaren Schalter kurzzeitig elektrisch miteinander verbunden werden können, sowie einen Schaltungspfad zur Aufladung des kapazitiven Energiespeichers aus der Spannung des Gleichspannungsnetzes und zur Überspannungsbegrenzung, welcher mindestens diesen Energiespeicher und/oder einen Reihenwiderstand und eine Sperrdiode enthält.

11. Vorrichtung nach einem der vorhergehenden Ansprüche, wobei dem Stromimpulsgenerator zusätzliche Elemente zur Überspannungsbegrenzung, insbesondere nichtlineare Widerstände wie Varistoren, parallel geschaltet oder in diesen integriert sind.

## Claims

1. Apparatus for switching in a DC voltage grid with a switching device (12) for interrupting the flow of current in at least one first line (21, 211, 212, 213) of the DC voltage grid, wherein the switching device (12) can be inserted with a first and a second connection (17, 18) into the first line (21, 211, 212, 213) of the DC voltage grid, and a damping member (101, 111, 120, 210, 220) for energy absorption of the terminal voltage applied, which damping member
- has a first and a second node which are electrically connected via a damping element (102, 217),
- has an electrical connection from the first node to the first connection (17) either via a first controlled switching element (104, 112) or via a first uncontrolled switching element (121, 221), wherein the first uncontrolled switching element (121, 221) has semiconductor diodes and is switched to be conducting from the point of view of the first node, **characterized by**
- an electrical connection from the first node to the second connection (18) either via a second controlled switching element (105, 113) or via a second uncontrolled switching element (122, 221), wherein the second uncontrolled switching element (122, 221) has semiconductor diodes and is switched to be conducting from the point of view of the first node.

2. Apparatus according to Claim 1, in which the first and/or second switching element (104, 112, 121, 221, 105, 113, 122, 219) has semiconductor switches (112, 113), in particular thyristors (112, 113).

3. Apparatus according to Claim 1, in which the first and/or second switching element (104, 112, 121, 221, 105, 113, 122, 219) comprise mechanical switches (104, 105, 219) and in which the damping member (101, 210) comprises a further semiconductor switch (13, 218) between the first and second nodes.

4. Apparatus according to any of the preceding claims, in which the damping element (102, 217) comprises one or more varistor elements (102, 217).

5. Apparatus according to any of the preceding claims, in which the first and second switching elements (104, 112, 121, 221, 105, 113, 122) are parts of a mechanical or power-electronic changeover switch (219, 221).

6. Apparatus according to any of the preceding claims, in which the switching device (12) has two hybrid switches connected back-to-back in series, which in each case have a parallel circuit composed of an uncontrolled current-direction-dependent switch and of a controllable switch.

7. Apparatus according to Claim 6, in which the switching device (12) has a current pulse generator which is set up to generate a current pulse in response to a control command, with the result that the current direction in one of the hybrid switches is temporarily reversible.

8. Apparatus according to Claim 6 or 7, in which the uncontrolled current-direction-dependent switch is a semiconductor diode.

9. Apparatus according to any of Claims 6 to 8, in which the controllable switch is a vacuum interrupter.

10. Apparatus according to any of the preceding claims, wherein the current pulse generator contains at least one capacitive energy store and an inductance, which can be temporarily electrically connected to one another via a controllable switch, and a circuit path for charging the capacitive energy store from the voltage of the DC voltage grid and for overvoltage limiting, which circuit path contains at least said energy store and/or a series resistor and a blocking diode.

11. Apparatus according to any of the preceding claims, wherein additional elements for overvoltage limiting, in particular nonlinear resistors such as varistors, are connected in parallel with the current pulse generator or are integrated therein.

## Revendications

1. Système de commutation dans un réseau de tension continue, comprenant un dispositif (12) de commutation pour interrompre le flux de courant dans au moins une première ligne (21, 211, 212, 213) du réseau de tension continue, le dispositif (12) de commutation pouvant être inséré par une première et une deuxième bornes (17, 18) dans la première ligne (21, 211, 212, 213) du réseau de tension continue, et un organe (101, 111, 120, 210, 220) d'amortissement pour absorber l'énergie de la tension aux bornes appliquée, qui
- a un premier et un deuxième point nodal reliés électriquement par un élément (102, 217) d'amortissement,
- une liaison électrique du premier point nodal à la première borne (17), soit par un premier élément (104, 112) de commutation commandé, soit par un premier élément (121, 221) de commutation non commandé, le premier élément (121, 221) de commutation non commandé ayant des diodes à semi-conducteur et étant monté conducteur vu depuis le premier noeud, **caractérisé par**
- une liaison électrique du premier point nodal à la deuxième borne (18) par, soit un deuxième élément (105, 113) de commutation commandé, soit par un deuxième élément (122, 221) de commutation non commandé, le deuxième élément (122, 221) de commutation non commandé ayant des diodes à semi-conducteur et étant monté conducteur vu depuis le premier noeud.

2. Système suivant la revendication 1, dans lequel le premier et/ou le deuxième élément (104, 112, 121, 221, 105, 113, 122, 219) de commutation a des interrupteurs (112, 113) à semiconducteur, notamment des thyristors (112, 113).

3. Système suivant la revendication 1, dans lequel le premier et/ou le deuxième élément (104, 112, 121, 221, 105, 113, 122, 219) de commutation comprend des interrupteurs (104, 105, 219) mécaniques, et dans lequel l'organe (101, 210) d'amortissement comprend un autre interrupteur (13, 218) à semiconducteur entre le premier et le deuxième point nodal.

4. Système suivant l'une des revendications précédentes, dans lequel l'élément (102, 217) d'amortissement comprend un ou plusieurs éléments (102, 217) de varistance.

5. Système suivant l'une des revendications précédentes, dans lequel le premier et le deuxième éléments (104, 112, 121, 221, 105, 113, 122) de commutation font partie d'un inverseur (219, 221) mécanique ou à électronique de puissance.

6. Système suivant l'une des revendications précédentes, dans lequel le dispositif (12) de commutation a deux interrupteurs hybrides montés en série tête-bêche, qui ont respectivement un circuit parallèle d'un interrupteur non commandé et qui dépend du sens du courant et d'un interrupteur pouvant être commandé.

7. Système suivant la revendication 6, dans lequel le dispositif (12) de commutation a un générateur d'impulsion de courant qui est conçu pour, sur une instruction de commande, produire une impulsion de courant, de manière à pouvoir inverser, à bref délai, le sens du courant dans l'un des interrupteurs hybrides.

8. Système suivant la revendication 6 ou 7, dans lequel l'interrupteur non commandé et qui dépend du sens du courant est une diode à semi-conducteur.

9. Système suivant l'une des revendications 6 à 8, dans lequel l'interrupteur pouvant être commandé est un tube interrupteur à vide.

10. Système suivant l'une des revendications précédentes, dans lequel le générateur d'impulsion de courant comporte au moins un accumulateur d'énergie capacitif et une inductance, qui peuvent être reliés entre eux électriquement, à bref délai, par un interrupteur pouvant être commandé, ainsi qu'un trajet de circuit pour charger l'accumulateur d'énergie capacitif à partir de la tension du réseau de tension continue et pour limiter la surtension, qui contient au moins cet accumulateur d'énergie et/ou une résistance série et une diode de blocage.

11. Système suivant l'une des revendications précédentes, dans lequel il est monté, en parallèle au générateur d'impulsion de courant ou il lui est intégré, des éléments supplémentaires de limitation de la surtension, notamment des résistances non linéaires comme des varistances.
